# EUROPEAN PATENT SPECIFICATION

(11) **EP 2 400 810 B1**
(45) Date of publication and mention of the grant of the patent: **02.01.2013**
(21) Application number: 10167100.6
(22) Date of filing: 23.06.2010
(51) Int. Cl.: H04W 74/08

(54) **Sending a message from a telecommunication device to a mobile telecommunication network**
Senden einer Nachricht von einem Telekommunikationsgerät zu einem Mobiltelekommunikationsnetz
Envoi d'un message depuis un dispositif de télécommunication vers un réseau de télécommunication mobile

(43) Date of publication of application: 28.12.2011
(73) Proprietor: ML-C MobileLocation-Company GmbH, 81539 München (DE)
(72) Inventor: Malek, Moni, 81677, München (DE)
(74) Representative: Dendorfer, Claus

(56) References cited:
- EP-A1- 1 804 535
- EP-A1- 2 184 950
- EP-A1- 2 187 547
- WO-A1-2007/045504
- GB-A- 2 424 799
- US-A1- 2008 225 756

## Description

### FIELD OF THE INVENTION

The present invention relates to the field of telecommunication. More precisely, the invention relates to the sending of messages from a telecommunication device to a mobile telecommunication network.

### BACKGROUND OF THE INVENTION

Mobile telecommunication networks, especially Global System for Mobile Communication (GSM) and Universal Mobile Telecommunications System (UMTS) networks, have become ubiquitous.

Depending on the underlying network, the telecommunication standards utilize time division, frequency division, or code division multiple access methods (TDMA, FDMA, CDMA) to share network resources with a large number of telecommunication devices. These methods require at least an initial negotiation to assign a specific channel, like a certain time slot, to a telecommunication device. Such initial negotiation is done on a random access channel. Accessing the random access channel carries a collision risk, as any telecommunication device in the neighborhood may access the random access channel to request a channel, thus potentially interfering with a message sent nearly simultaneously by another telecommunication device on the random access channel. The use of Slotted ALOHA is common practice to minimize collisions on a random access channel. However, even with Slotted ALOHA, the throughput of available time slots on the random access channel is limited to a rather low level.

There is a growing need in mobile telecommunication networks to support very large numbers of telecommunication devices which cause low average network load. Examples of such telecommunication devices are tracking or metering devices, where only small amounts of data are transmitted in constant or varying time intervals within short active time windows to a server or a control room. Supporting large numbers of such devices will cause a marked increase of the load on the random access channels, whereas many other network resources are only slightly affected due to the small amount of data to be transferred. Each answering to a paging request or location update will cause traffic on the random access channel and thus will lead to a higher amount of collisions on the random access channel.

US 2008/225756 A1 discloses a method for synchronizing unscheduled trigger messages among a plurality of mobile devices and a WLAN access point. Each mobile device monitors the service periods of the other mobile devices and stores the ending time of an unscheduled service period. This strategy allows a mobile device to detect a period of free air after a certain period of monitoring the other mobile devices.

WO 2007/045504 A1 discloses techniques for performing random access procedures over a radio interface in order to reduce the risk of collisions in the access channels. The techniques are based on the idea of assigning users to different random access user groups which use different access channels. In another embodiment, users are assigned to different priority classes. Depending on the priority class, a different number of access channels is available.

### OBJECTS AND SUMMARY OF THE INVENTION

It is an object of the present invention to improve the use of network resources when supporting a large number of telecommunication devices that cause low average network load. More precisely, the present invention addresses the problem of reducing the probability of collisions for messages sent from a telecommunication device to the mobile telecommunication network.

The present invention is defined by the independent claims. The dependent claims concern optional features of some embodiments of the invention.

The present invention is based on the idea that a telecommunication device determines a sending time for a message to be sent on the random access channel in a way that collisions with messages sent from a plurality of other telecommunication devices are reduced or avoided. The telecommunication device obtains current time information that is synchronous with the plurality of other telecommunication devices. This time information is used as a time reference when sending the message. The message will be sent when the obtained current time matches the determined sending time.

Collisions of messages may occur if at least two telecommunication devices located in physical proximity, even if they are assigned to different cells, send a message on the same or adjacent frequency bands and during the same time intervals, wherein the sent messages at least partially overlap. If all telecommunication devices located in the same cell and in all cells in the neighborhood that use the same random access channel have exclusive sending times, collisions of messages can be avoided. Even if only a part of the telecommunication devices located in the same cell that use the same random access channel make use of the present invention, the probability of collisions on the random access channel is lowered.

In some embodiments, the sending time is individually determined for the telecommunication device. In other embodiments, the sending time is determined for a group of telecommunication devices. In this case, each group may, in some embodiments, contain telecommunication devices which are normally located in different geographical regions so that there is only a collision risk if at least two telecommunication devices of the same group are located in the same cell or in neighboring cells and use the same random access channel.

In some embodiments, the sending time is determined based on a message alignment identifier that is unique for the telecommunication device or the group of telecommunication devices. In some embodiments, the message alignment identifier is stored in a memory field of an integrated circuit of the telecommunication device.

In some embodiments, the sending time is aligned to access time slots within an access time frame that is repeated continuously. Each telecommunication device or each group of telecommunication devices may have at least one access time slot for exclusive use within each access time frame. In GSM networks, the access time slot may correspond to a GSM TDMA time slot, in which an access control burst may be transmitted. In UMTS networks, the access time slot may correspond to an access slot. In such embodiments, the access time frame may be independent from the frame structure of the underlying mobile telecommunication network. In other words, the access time frame does not necessarily need to correspond to a GSM TDMA time frame or a UMTS access frame.

In some embodiments, the telecommunication device or the group of telecommunication devices may use several access time slots within each access time frame, wherein the amount of granted access time slots depends on a priority criterion assigned to the telecommunication device or the group of telecommunication devices.

The invention is generally applicable to all kinds of mobile telecommunication networks (e.g., mobile phone cellular networks or satellite phone networks) that use a random access channel. The mobile phone cellular networks comprise Second Generation (2G) networks like the Global System for Mobile Communications (GSM), including its supplements General Packet Radio Service (GPRS) and Enhanced Data rates for GSM Evolution (EDGE), or Interim Standard 95 (IS-95, also known under its brand name cdmaOne), furthermore Third Generation (3G) networks like the Universal Mobile Telecommunications System (UMTS), including its supplements High Speed Downlink Packet Access (HSDPA) and High-Speed Uplink Packet Access (HSUPA), or CDMA2000. The satellite phone networks comprise Globalstar, Inmarsat, Iridium, MSAT, SkyTerra, Terrestar, and Thuraya.

In GSM networks that support GPRS, the random access channel also comprises a packet random access channel (PRACH). In UMTS networks, the random access channel comprises a physical random access channel (PRACH).

The invention can be applied to telecommunication devices using all kinds of satellite navigation systems, where the synchronous time information can be obtained from, e.g., the Global Positioning System (GPS), the Globalnaya Navigatsionnaya Sputnikovaya Sistema (GLONASS), the Galileo positioning system (Galileo), or the Compass navigation system (Compass).

In some embodiments, the synchronous time information is derived from the frame structure of the underlying mobile telecommunication network by counting time slots and frames.

In some embodiments of the present invention, an integrated circuit or a module of integrated circuits or a telecommunication device comprises a time determining function providing time information that is synchronous with the other telecommunication devices.

In some embodiments, the time determining function obtains its synchronous time by directly communicating with a time reference that is external to both the telecommunication device and the mobile telecommunication network. This approach has the advantage that a time which is synchronous throughout the whole mobile telecommunication network or at least within each cell reduces the risk of colliding messages due to unsynchronized timing.

According to some embodiments of the invention, the described method is implemented in at least one of an integrated circuit or a module that comprises integrated circuits or a telecommunication device. In an embodiment, the integrated circuit is a message alignment controller, which comprises a function for determining the desired sending time. The message alignment controller comprises an interface to a time determining module providing the synchronous time information and an interface to a telecommunication module, wherein the telecommunication module provides telecommunication features and uses the determined sending time provided by the message alignment controller. In another embodiment, the integrated circuit comprises the functionality of the message alignment controller and the baseband controller for telecommunication purposes and a navigation baseband controller to obtain the synchronous time information derived from the signal of a satellite navigation system. In another embodiment, the radio frequency signal processors for both telecommunication and navigation signals are added to the previously described integrated circuit. The division of the respective functionalities between various integrated circuits and modules is not restricted to the described embodiments as long as the chosen integrated circuit design comprises the described methods or parts thereof.

In some embodiments, the synchronous time information is determined by counting time slots and frames of the frame structure of the underlying mobile telecommunication network. This results in an absence of a time determining module in the integrated circuits. The baseband controller for telecommunication purposes will then provide the required time slot and frame counts to the message alignment controller.

The invention also comprises a machine-readable medium having suitable program instructions to realize the described method, for example, on a general-purpose computer or in a programmable integrated circuit. The machine-readable medium may be any kind of physical or non-physical data carrier like, for example, a computer disk or a CD-ROM or a semiconductor memory or a signal transmitted over a computer network.

### BRIEF DESCRIPTION OF THE DRAWINGS

Further features, objects and advantages of the invention will become apparent from the following detailed description, in connection with the annexed schematic drawings, in which:
Fig. 1 shows a block diagram of a telecommunication device according to an embodiment of the present invention,
Fig. 2 shows telecommunication devices and a mobile telecommunication network,
Fig. 3 shows components of a time determining module,
Fig. 4 shows embodiments of integrated circuits and modules thereof,
Fig. 5 shows a conventional, unaligned message flow between a first telecommunication device and a mobile telecommunication network, and a second telecommunication device and the mobile telecommunication network,
Fig. 6 shows the aligned message flow between a first telecommunication device and a mobile telecommunication network, and a second telecommunication device and the mobile telecommunication network, according to an embodiment of the present invention,
Fig. 7 shows the aligned message flow between a first telecommunication device and a mobile telecommunication network, and a second telecommunication device and the mobile telecommunication network, according to another embodiment of the present invention,
Fig. 8 shows the TDMA frame structure as used in GSM, and
Fig. 9 shows a telecommunication device communicating with a base station of a mobile telecommunication network, thereby causing interference at another base station in the vicinity of the telecommunication device.

### DETAILED DESCRIPTION OF EMBODIMENTS OF THE INVENTION

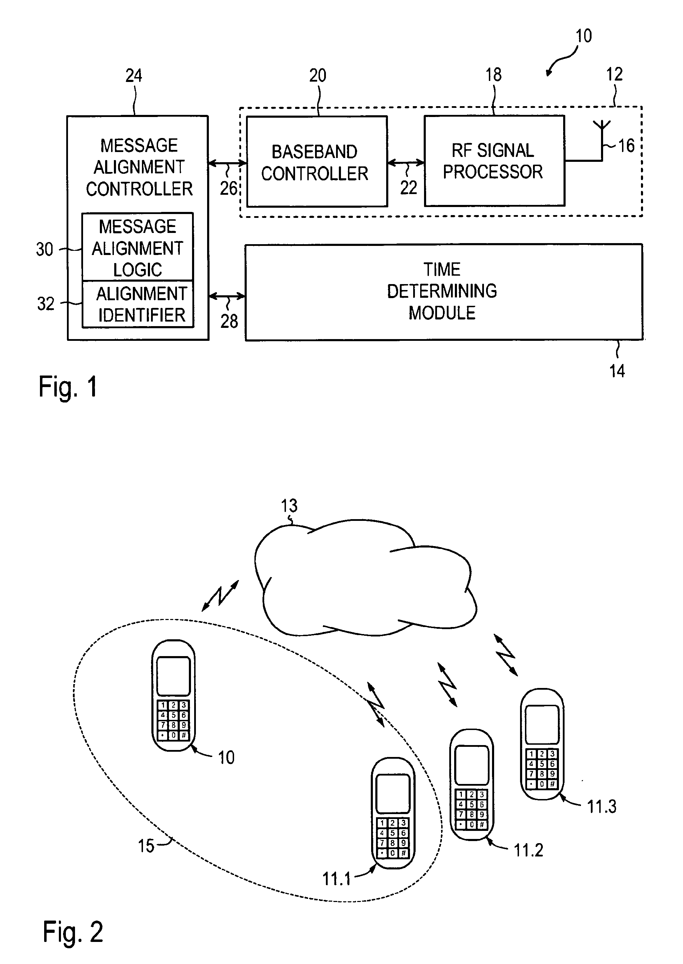

Fig. 1 shows a telecommunication device 10, comprising a telecommunication module 12, a time determining module 14, and a message alignment controller 24. The message alignment controller 24 obtains synchronous time information from the time determining module 14 via an interface 28. The message alignment controller 24 further controls the telecommunication module 12 via an interface 26 to send a message on a random access channel to a mobile telecommunication network 13 when the current time extracted from the synchronous time information matches a determined sending time.

The telecommunication module 12 comprises an antenna system 16, an RF signal processor 18, and a baseband controller 20. The RF signal processor 18 is controlled by the baseband controller 20 via an interface 22.

The message alignment controller 24 contains a logic unit 30 to determine the sending time based on an alignment identifier 32 that is stored in, or accessible to, the message alignment controller 24. The value of the alignment identifier 32 determines an exclusive sending time. Collisions on the random access channel are avoided if other telecommunication devices located in the same cell and using the same random access channel have a different alignment identifier 32.

Fig. 2 shows the telecommunication device 10 and the mobile telecommunication network 13. The mobile telecommunication network 13 communicates with the telecommunication device 10 and with a plurality of other telecommunication devices 11.1, 11.2, 11.3, in the following referred to as telecommunication devices 11.x. Telecommunication devices sharing the same alignment identifier 32 as shown in group 15 comprising the telecommunication device 10 and telecommunication device 11.1 will share the same sending times.

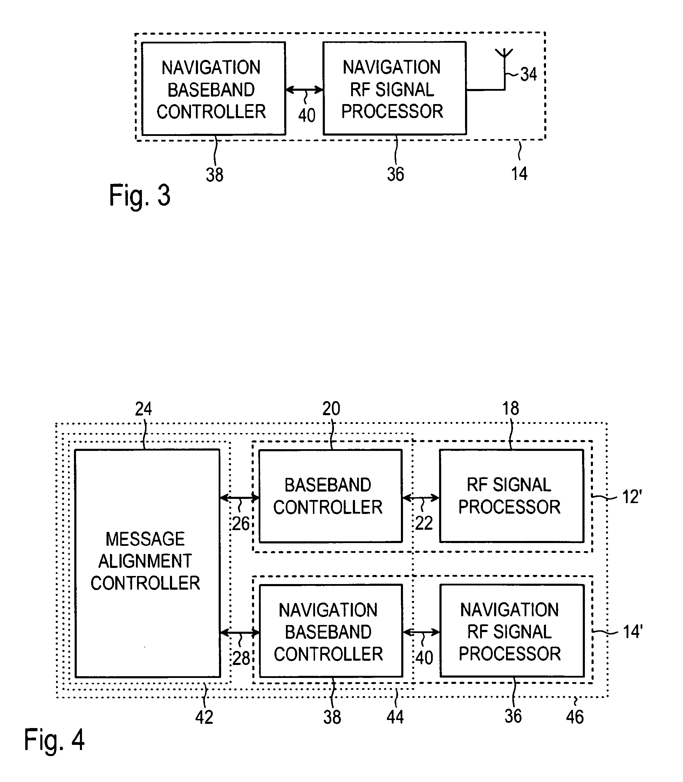

Fig. 3 shows the details of an embodiment of the time determining module 14, which obtains the synchronous time information from a satellite navigation system. It comprises an antenna system 34, a navigation RF signal processor 36, and a navigation baseband controller 38. The navigation RF signal processor 36 is controlled by the navigation baseband controller 38 via an interface 40.

The time determining module 14 can also be based on other techniques which provide time information that is synchronous with the other telecommunication devices 11.x.

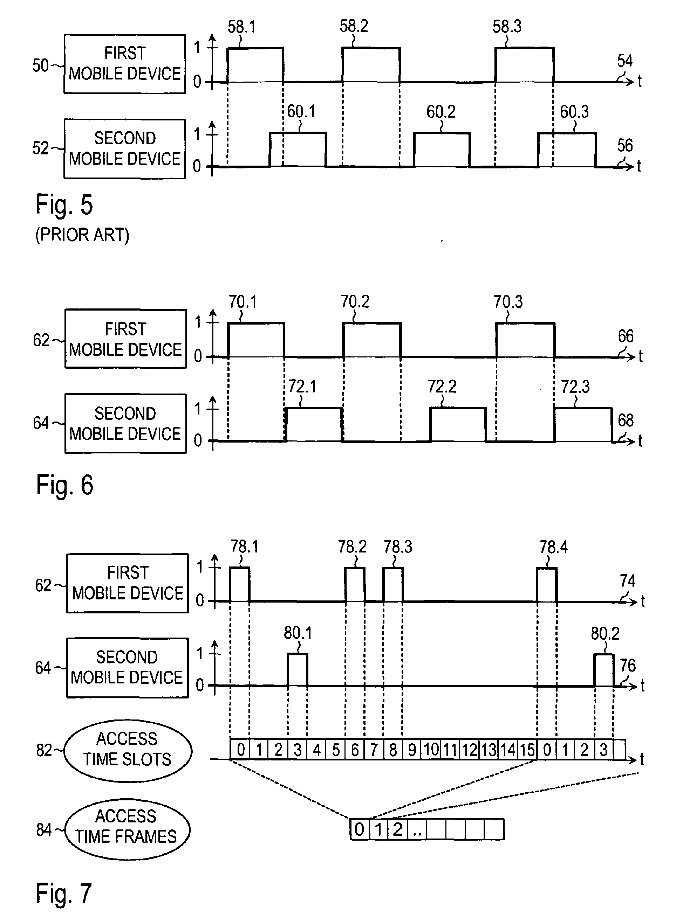

Fig. 5 shows an example of the prior art: Two conventional telecommunication devices 50 and 52 are located in the same cell. The first telecommunication device 50 sends a message 58.1 on a random access channel to the mobile telecommunication network 13 to request a channel. A short time later, the second telecommunication device 52 sends a message 60.1 on the same random access channel to the mobile telecommunication network 13. The message of the second telecommunication device 52 overlaps with the message of the first telecommunication device 50 and thus degrades the signal. The mobile telecommunication network 13 cannot decode the degraded message. After a calculated waiting time derived from random elements, the first telecommunication device 50 sends a message 58.2 again. In this scenario, the message 58.2 can be properly decoded at the mobile telecommunication network 13, as the second telecommunication device 52 sends its own message 60.2 due to a randomly determined longer waiting time so that no collision occurs. However, a collision occurs again due to the overlap of messages 58.3 and 60.3. It is an object of the present invention to reduce or avoid such collisions.

Fig. 6 shows two telecommunication devices 62 and 64 according to the present invention. They are located in the same cell and use the same random access channel. Initially, the first telecommunication device 62 sends a message 70.1 on the random access channel to the mobile telecommunication network 13 to request a channel. The sending time of the telecommunication devices 62 and 64 has been determined based on different alignment identifiers 32 leading to different, exclusive sending times. This procedure ensures that the second telecommunication device 64 will not send a message on the random access channel while the first telecommunication device 62 is sending one.

In some embodiments, the sending time is exclusive for each telecommunication device. In other embodiments, the sending time is exclusive for a group 15 of telecommunication devices. Telecommunication devices of the same group 15 share the same sending times. This approach does not completely avoid message collisions, but reduces the probability, as collisions can only occur if telecommunication devices of the same group 15 are located within the same cell or in cells in the neighborhood and use the same or an interfering random access channel.

In some embodiments, the sending times are aligned to discrete time intervals, namely access time slots 82. The slotting of sending times maximizes the amount of available non-overlapping sending times per given time interval.

In some embodiments, a configurable amount of access time slots 82 is organized in an access time frame 84, which is repeated continuously. Each access time slot 82 is repeated in a cycle that corresponds to the cycle of the access time frames 84. A telecommunication device has at least one granted access time slot 82 within each access time frame 84 for sending a message on the random access channel. Fig. 7 shows the access time slots 82 and the access time frames 84.

In embodiments with a large number of telecommunication devices, the same access time slot 82 is assigned to a group 15 of telecommunication devices which preferably contains telecommunication devices of different geographical regions to reduce the probability of having such telecommunication devices in the same cell or in neighboring cells.

In some embodiments, the mobile telecommunication network 13 distinguishes telecommunication devices according to the present invention from conventional telecommunication devices. The mobile telecommunication network 13 will indicate different time slots being available for accessing the random access channel by these two types of telecommunication devices. For example, in a GSM network, the TDMA Time Slots #0, #1, #3, #5, #6, #7 may be reserved for conventional telecommunication devices, whereas the TDMA Time Slots #2 and #4 may be reserved for telecommunication devices according to the present invention. In such embodiments, collisions can be avoided for telecommunication devices according to the present invention if both types of telecommunication devices are located in the same cell or in neighboring cells.

According to another embodiment, several access time slots 82 within each access time frame 84 are assigned to a telecommunication device, thus providing higher random access priority. The higher the assigned priority, the higher the number of access time slots 82 assigned to a telecommunication device. Fig. 7 shows an embodiment in which the first telecommunication device 62 is allowed to use up to three access time slots 78.1, 78.2, and 78.3 in each access time frame 84, whereas the second telecommunication device 64 has one access time slot 80.1 in each access time frame 84. In some embodiments, the random access priority is derived from the access service class.

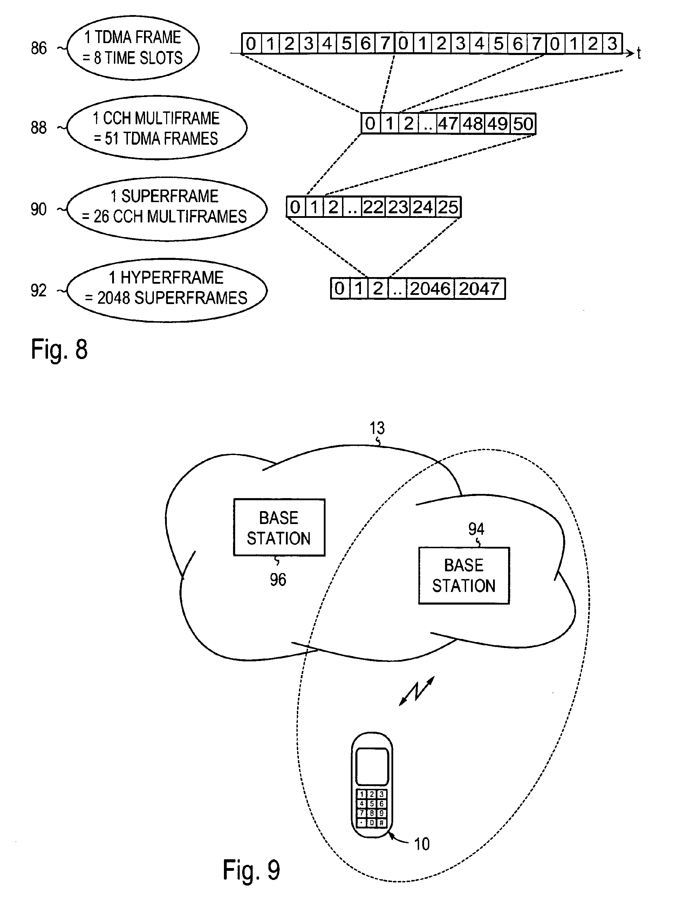

The access time frames 84 are independent from the frame structure of the underlying mobile telecommunication network 13. Fig. 8 shows the frame structure as used in GSM. One TDMA Frame 86 lasts 4,6 ms and consists of 8 TDMA Time Slots. One Control Channel Multiframe 88 lasts 235 ms and consists of 51 TDMA Frames 86. One Superframe 90 lasts 6,12 s and consists of 26 Control Channel Multiframes 88. One Hyperframe 92 lasts approximately 3,5 h and consists of 2048 Superframes 90. A message transmitted on the random access channel of a GSM or GPRS network must hit a TDMA Time Slot. However, the access time frame 84 may have a length that is independent from the frame structure. In other words, a telecommunication device of the present invention may not necessarily send a message on the random access channel within each TDMA frame, or each Multiframe, or each Superframe, or even each Hyperframe.

Some embodiments derive the synchronous time information from the frame or timing structure of the underlying network. For example, in the case of a GSM network, TDMA Frames 86, Multiframes 88, Superframes 90, and Hyperframes 92 may be counted. In these embodiments, the access time frame 84 will be linked to a frame according to the frame structure of the underlying mobile telecommunication network 13. In GSM networks, the access time frame 84 will be at least one TDMA Frame 86, or at least one Multiframe 88, or at least one Superframe 90, or at least one Hyperframe 92. In some embodiments, a telecommunication device will send a message on the random access channel only within a specific TDMA Time Slot of a specific TDMA Time Frame 86. It depends on the duration of the access time frame 84 if the telecommunication device 10 needs to count a specific Control Channel Multiframe 88, or a specific Superframe 90, or a specific Hyperframe 92 to determine the appropriate sending time of a message to be sent on the random access channel. However, this approach guarantees synchronous time between the telecommunication devices 10 and 11.x only within the same cell.

Synchronous time derived from the frame structure does not avoid collisions on the random access channel resulting from interfering concurrent messages on the random access channel or an adjacent channel in a neighboring other cell.

Each base station of a cell manages the frames and the counting thereof independent from the other base stations. If a certain telecommunication device 10, e.g. in a GSM network, has a unique access time slot 82 within each Superframe 90 or any other frame of the underlying mobile telecommunication network 13, the absolute sending time will differ depending on the cell to which the certain telecommunication device 10 is currently connected. Thus it is still possible that two telecommunication devices 10, which are located in different neighboring cells having different access time slots will send a message on the random access channel at the same time.

Fig. 9 shows the telecommunication device 10 that is communicating with a base station 94 of the mobile telecommunication network 13. As the telecommunication device 10 is located within the limits of the cells around the base station 94 and the base station 96, the neighboring cell of base station 96 is also affected by messages sent from the telecommunication device 10 on the random access channel, even if these messages are expected to reach the base station 94. As long as the synchronous time depends on the base station specific counting of time slots and frames, it may happen that a telecommunication device will send a message contemporaneously with another telecommunication device in a neighboring cell, even if the devices use an access time slot 82 at a different position in the frame structure of the underlying mobile telecommunication network 13.

Directly utilizing a time reference that provides the same current time for all involved telecommunication devices of the mobile telecommunication network 13 may even avoid collisions on the random access channel resulting from interfering telecommunication devices in neighboring cells. The invention already provides a remarkable improvement if only a part of the telecommunication devices 10 use such a time reference. Such type of synchronous time information can be obtained from a satellite navigation system. When the access time slots 82 are based on a time that is synchronous for a plurality of telecommunication devices independent of their respective cells, the probability of collisions occurring on the random access channel can be lowered or even reduced to nil.

Another benefit of directly communicating with a time reference that is external to the telecommunication devices and the mobile telecommunication network 13 is that the frame structure of the underlying network does not need to be fully analyzed to determine the appropriate sending time. In GSM networks, a GSM TDMA Time Slot, a TDMA Time Frame 86, and a Multiframe 88 can be easily decoded from the Sync Bursts. Decoding the appropriate Superframe 90 or Hyperframe 92 requires a more complex handling which can be avoided if another type of synchronous time information is available.

According to an embodiment of the invention, the method or several steps thereof are implemented in an integrated circuit or a module comprising several integrated circuits. Fig. 4 shows an integrated circuit 42, which comprises the functionality of the message alignment controller 24 as shown in Fig. 2. The message alignment logic 30 of the message alignment controller 24 determines the sending time based on the alignment identifier 32 and uses the synchronous time information provided by the navigation baseband controller 38 as time reference. In other embodiments, the integrated circuit 44 combines the functionality of the baseband controller 20 and the navigation baseband controller 38 with the message alignment controller 24. In other embodiments, the integrated circuit 46 adds the functionality of the RF signal processor 18 and the navigation RF signal processor 36 to the components of the integrated circuit 44.

In some embodiments, the synchronous time information is obtained by other means than a satellite navigation system. In such cases, the integrated circuits 44 and 46 comprise the required time determining functionality. If the synchronous time information is obtained by counting time slots and frames of the frame structure of the underlying network, the baseband controller 20 will provide the counts to the message alignment controller 24 that will determine an appropriate access time slot 82 for sending a message on the random access channel.

It is understood that embodiments in which the time information is obtained from a satellite navigation system do not need to constantly receive and process the actual satellite signals. Rather, such embodiments will usually comprise an internal timer which is driven by a reasonably accurate oscillator and is only synchronized periodically with the absolute time information from the satellite navigation system.

The invention can be used in all kinds of mobile telecommunication networks 13 where a telecommunication device 10 sends a message to a mobile telecommunication network 13 with a risk of collision.

The particulars contained in the above description of sample embodiments should not be construed as limitations of the scope of the invention, but rather as exemplifications of some embodiments thereof. Many variations are possible and are immediately apparent to the person skilled in the arts. In particular, this concerns variations that comprise a combination of features of the individual embodiments disclosed in the present specification. Accordingly, the scope of the invention should be determined not by the embodiments illustrated, but by the appended claims and their legal equivalents.

## Claims

1. A method executed on a telecommunication device (10) for sending a request on a random access channel to access a mobile telecommunication network (13), the mobile telecommunication network (13) communicating with the telecommunication device (10) and a plurality of other telecommunication devices (11.x), wherein
the telecommunication device (10) comprises a time determining function (14) providing time information that is synchronous with the plurality of other telecommunication devices (11.x), and wherein
the telecommunication device (10) comprises an identifier (32), the method comprising:
determining a sending time for the request based on the identifier (32), wherein the sending time is specific for the telecommunication device (10) or for a group (15) of telecommunication devices that comprises the telecommunication device (10) and at least one of the other telecommunication devices (11.x), and
sending the request on the random access channel when the current time as determined by the time determining function (14) matches the determined sending time.

2. The method of claim 1, wherein
the identifier (32) is stored in a memory field of the telecommunication device (10), wherein
the memory field is different from memory fields located on a Subscriber Identity Module placed in the telecommunication device (10).

3. The method of claim 1 or claim 2, wherein
the value of the identifier determines an exclusive sending time among a plurality of telecommunication devices having different identifier values.

4. The method of any one of claims 1 - 3, wherein
the sending time is aligned to time slots (82) within a continuously repeated time frame (84).

5. The method of any one of claims 1 - 4, wherein
at least one of the time slots (82) in each time frame (84) is exclusively assigned to the telecommunication device (10) or the group (15) of telecommunication devices.

6. The method of claim 5, wherein
the number of time slots (82) in each time frame (84) exclusively assigned to the telecommunication device (10) or the group (15) of telecommunication devices depends on the access service class or another priority criterion.

7. The method of any one of claims 1 - 6, wherein
the mobile telecommunication network (13) is a GSM network, wherein the random access channel comprises the GSM random access channel, and wherein
the telecommunication device (10) comprises a mobile station, and wherein
the Subscriber Identity Module is a SIM.

8. The method of any one of claims 1 - 6, wherein
the mobile telecommunication network (13) is a GSM network supporting GPRS, wherein
the random access channel comprises one of the GSM random access channel and the GPRS packet random access channel, and wherein
the telecommunication device (10) comprises a mobile station, and wherein
the Subscriber Identity Module is a SIM.

9. The method of any one of claims 1 - 6, wherein
the mobile telecommunication network (13) is a 3G network, wherein
the random access channel comprises the UMTS physical random access channel, wherein
the telecommunication device (10) comprises a user equipment, and wherein
the Subscriber Identity Module is a UICC.

10. The method of any one of claims 1 - 9, wherein
the time determining function (14) obtains its synchronous time by directly communicating with a time reference that is external to both the telecommunication device (10) and the mobile telecommunication network (13).

11. The method of any one of claims 1 - 10, wherein
the time determining function (14) obtains the synchronous time information from radio frequency signals received from a satellite navigation system.

12. The method of claim 11, wherein
the time determining function (14) comprises a GPS or Galileo receiver, and wherein
the synchronous time information is the GPS or Galileo time.

13. A module comprising one or more integrated circuits (42, 44, 46), the module comprising:
a telecommunication section (12') adapted for sending requests on a random access channel to access a mobile telecommunication network (13), and
a time determining section (14') adapted for providing time information, wherein
the module is configured to perform the method of any one of claims 1-12.

14. A telecommunication device (10), comprising the module of claim 13.

15. A machine-readable medium that comprises a plurality of program instructions, wherein the program instructions are adapted for causing at least one processor to perform the method of any one of claims 1 - 11.

## Patentansprüche

1. Verfahren, das auf einem Telekommunikationsgerät (10) ausgeführt wird, zum Senden einer Anforderung auf einem Kanal mit zufälligem Zugriff (*random access channel*), um auf ein Mobiltelekommunikationsnetz (13) zuzugreifen, wobei das Mobiltelekommunikationsnetz (13) mit dem Telekommunikationsgerät (10) und einer Mehrzahl anderer Telekommunikationsgeräte (11.x) kommuniziert, wobei
das Telekommunikationsgerät (10) eine Zeitbestimmungsfunktion (14) umfasst, die Zeitinformationen bereitstellt, die synchron mit der Mehrzahl anderer Telekommunikationsgeräte (11.x) sind, und wobei
das Telekommunikationsgerät (10) einen Identifikator (32) umfasst, wobei das Verfahren aufweist:
Bestimmen einer Sendezeit für die Anforderung beruhend auf dem Identifikator (32), wobei die Sendezeit spezifisch für das Telekommunikationsgerät (10) oder für eine Gruppe (15) von Telekommunikationsgeräten, die das Telekommunikationsgerät (10) und mindestens eines der anderen Telekommunikationsgeräte (11.x) umfasst, ist, und
Senden der Anforderung auf dem Kanal mit zufälligem Zugriff, wenn die gegenwärtige Zeit, wie sie von der Zeitbestimmungsfunktion (14) bestimmt wird, zu der bestimmten Sendezeit passt.

2. Verfahren nach Anspruch 1, wobei
der Identifikator (32) in einem Speicherfeld des Telekommunikationsgeräts (10) gespeichert ist, wobei
sich das Speicherfeld von Speicherfeldern unterscheidet, die auf einem in dem Telekommunikationsgerät (10) befindlichen Teilnehmeridentitätsmodul (*Subscriber Identity Module*) gelegen sind.

3. Verfahren nach Anspruch 1 oder Anspruch 2, wobei
der Wert des Identifikators eine ausschließliche Sendezeit unter einer Mehrzahl von Telekommunikationsgeräten mit unterschiedlichen Identifikatorwerten bestimmt.

4. Verfahren nach einem der Ansprüche 1 - 3, wobei
die Sendezeit an Zeitschlitzen (82) innerhalb eines ständig wiederholten Zeitrahmens (84) ausgerichtet ist.

5. Verfahren nach einem der Ansprüche 1 - 4, wobei
mindestens einer der Zeitschlitze (82) in jedem Zeitrahmen (84) dem Telekommunikationsgerät (10) oder der Gruppe (15) von Telekommunikationsgeräten exklusiv zugeordnet ist.

6. Verfahren nach Anspruch 5, wobei
die Anzahl von Zeitschlitzen (82) in jedem Zeitrahmen (84), die dem Telekommunikationsgerät (10) oder der Gruppe (15) von Telekommunikationsgeräten exklusiv zugeordnet sind, von der Zugangsdienstklasse (*access service class*) oder von einem anderen Prioritätskriterium abhängt.

7. Verfahren nach einem der Ansprüche 1 - 6, wobei
das Mobiltelekommunikationsnetz (13) ein GSM-Netz ist, wobei
der Kanal mit zufälligem Zugriff den GSM-Kanal mit zufälligem Zugriff (GSM *random access channel*) umfasst, und wobei
das Telekommunikationsgerät (10) eine Mobilstation umfasst, und wobei das Teilnehmeridentitätsmodul ein SIM ist.

8. Verfahren nach einem der Ansprüche 1 - 6, wobei
das Mobiltelekommunikationsnetz (13) ein GSM-Netz ist, das GPRS unterstützt, wobei
der Kanal mit zufälligem Zugriff den GSM-Kanal mit zufälligem Zugriff (GSM *random access channel*) oder den GPRS-Paket-Kanal mit zufälligem Zugriff (*GPRS packet random access channel*) umfasst, und wobei
das Telekommunikationsgerät (10) eine Mobilstation umfasst, und wobei das Teilnehmeridentitätsmodul ein SIM ist.

9. Verfahren nach einem der Ansprüche 1 - 6,
bei dem das Mobiltelekommunikationsnetz (13) ein 3G-Netz ist, wobei der Kanal mit zufälligem Zugriff den UMTS-Kanal mit physischem zufälligem Zugriff (*UMTS physical random access channel*) umfasst, wobei
das Telekommunikationsgerät (10) ein Benutzergerät umfasst, und wobei das Teilnehmeridentitätsmodul ein UICC ist.

10. Verfahren nach einem der Ansprüche 1 - 9, bei dem
die Zeitbestimmungsfunktion (14) ihre synchrone Zeit erhält, indem sie direkt mit einer Zeitreferenz außerhalb sowohl des Telekommunikationsgeräts (10) als auch des Mobiltelekommunikationsnetzes (13) kommuniziert.

11. Verfahren nach einem der Ansprüche 1 - 10, wobei
die Zeitbestimmungsfunktion (14) die synchrone Zeitinformation von Radiosignalen erhält, die, von einem Satellitennavigationssystem stammend, empfangen werden.

12. Verfahren nach Anspruch 11, wobei
die Zeitbestimmungsfunktion (14) einen GPS- oder Galileo-Empfänger aufweist, und wobei
die synchrone Zeitinformation die GPS- oder Galileo-Zeit ist.

13. Modul mit einer oder mehreren integrierten Schaltungen (42, 44, 46), wobei das Modul umfasst:
einen Telekommunikationsabschnitt (12'), der dazu eingereichtet ist, Anforderungen auf einem Kanal mit zufälligem Zugriff (*random access channel*) zu senden, um auf ein Mobiltelekommunikationsnetz (13) zuzugreifen, und
einen Zeitbestimmungsabschnitt (14'), der dazu eingerichtet ist, Zeitinformationen bereitzustellen, wobei
das Modul dazu eingerichtet ist, das Verfahren nach einem der Ansprüche 1 - 12 auszuführen.

14. Telekommunikationsgerät (10) mit dem Modul nach Anspruch 13.

15. Maschinenlesbares Medium, das eine Vielzahl von Programmbefehlen aufweist, wobei die Programmbefehle dazu eingerichtet sind, zumindest einen Prozessor zu veranlassen, das Verfahren nach einem der Ansprüche 1 - 11 auszuführen.

## Revendications

1. Procédé exécuté sur un dispositif de télécommunication (10) afin d'envoyer une demande sur un canal à accès aléatoire dans le but d'accéder à un réseau de télécommunication mobile (13), le réseau de télécommunication mobile (13) communiquant avec le dispositif de télécommunication (10) et avec une pluralité d'autres dispositifs de télécommunication (11.x), dans lequel
le dispositif de télécommunication (10) comprend une fonction de détermination de l'heure (14) procurant des informations sur l'heure, lesquelles sont synchrones avec la pluralité d'autres dispositifs de télécommunication (11.x), et dans lequel
le dispositif de télécommunication (10) comprend un identificateur (32), le procédé comprenant :
la détermination d'une heure d'envoi de la demande sur la base de l'identificateur (32), l'heure d'envoi étant spécifique au dispositif de télécommunication (10) ou à un groupe (15) de dispositifs de télécommunication qui comprend le dispositif de télécommunication (10) et au moins l'un des autres dispositifs de télécommunication (11.x), et
l'envoi de la demande sur le canal à accès aléatoire lorsque l'heure actuelle, telle qu'elle est déterminée par la fonction de détermination de l'heure (14) correspond à l'heure d'envoi déterminée.

2. Procédé selon la revendication 1, dans lequel
l'identificateur (32) est stocké dans un champ mémoire du dispositif de télécommunication (10), dans lequel
le champ mémoire est différent de champs mémoire situés sur un module d'identité d'abonné placé dans le dispositif de télécommunication (10).

3. Procédé selon la revendication 1 ou la revendication 2, dans lequel
la valeur de l'identificateur détermine une heure exclusive d'envoi parmi une pluralité de dispositifs de télécommunication possédant différentes valeurs d'identificateurs.

4. Procédé selon l'une quelconque des revendications 1 à 3, dans lequel
l'heure d'envoi est alignée sur des tranches de temps (82) situées à l'intérieur d'une trame de temps (84) répétée de manière continue.

5. Procédé selon l'une quelconque des revendications 1 à 4, dans lequel
au moins l'une des tranches de temps (82) dans chaque trame de temps (84) est assignée exclusivement au dispositif de télécommunication (10) ou au groupe (15) de dispositifs de télécommunication.

6. Procédé selon la revendication 5, dans lequel
le nombre de tranches de temps (82) dans chaque trame de temps (84), assigné exclusivement au dispositif de télécommunication (10) ou au groupe (15) de dispositifs de télécommunication, dépend de la classe de service d'accès ou d'un autre critère de priorité.

7. Procédé selon l'une quelconque des revendications 1 à 6, dans lequel
le réseau de télécommunication mobile (13) est un réseau de type GSM dans lequel
le canal à accès aléatoire comprend le canal à accès aléatoire du système GSM, et dans lequel
le dispositif de télécommunication (10) comprend une station mobile, et dans lequel
le module d'identité d'abonné est un module SIM.

8. Procédé selon l'une quelconque des revendications 1 à 6, dans lequel
le réseau de télécommunication mobile (13) est un réseau de type GSM prenant en charge le système GPRS, dans lequel
le canal à accès aléatoire comprend l'un du canal à accès aléatoire du système GSM et du canal à accès aléatoire aux paquets du système GPRS, et dans lequel
le dispositif de télécommunication (10) comprend une station mobile, et dans lequel
le module d'identité d'abonné est un module SIM.

9. Procédé selon l'une quelconque des revendications 1 à 6, dans lequel
le réseau de télécommunication mobile (13) est un réseau de type 3G dans lequel
le canal à accès aléatoire comprend le canal d'accès physique aléatoire du système UMTS, dans lequel
le dispositif de télécommunication (10) comprend un équipement utilisateur, et dans lequel
le module d'identité d'abonné est une carte UICC.

10. Procédé selon l'une quelconque des revendications 1 à 9, dans lequel
la fonction de détermination de l'heure (14) récupère une heure synchrone en communiquant directement avec une référence de temps qui est à la fois externe pour le dispositif de télécommunication (10) et pour le réseau de télécommunication mobile (13).

11. Procédé selon l'une quelconque des revendications 1 à 10, dans lequel
la fonction de détermination de l'heure (14) récupère les informations synchrones sur l'heure à partir de signaux radiofréquence reçus depuis un système de navigation satellitaire.

12. Procédé selon la revendication 11, dans lequel
la fonction de détermination de l'heure (14) comprend un récepteur GPS ou Galileo et dans lequel
les informations synchrones sur l'heure sont l'heure GPS ou Galileo elle-même.

13. Module comprenant un ou plusieurs circuits intégrés (42, 44, 46), le module comprenant :
une section de télécommunication (12') conçue pour envoyer des demandes sur un canal à accès aléatoire afin d'accéder à un réseau de télécommunication mobile (13), et
une section de détermination de l'heure (14') conçue pour fournir des informations sur l'heure, dans lequel
le module est configuré pour exécuter le procédé conforme à l'une quelconque des revendications 1 à 12.

14. Dispositif de télécommunication (10) comprenant le module conforme à la revendication 13.

15. Support pouvant être lu par une machine qui comprend une pluralité d'instructions informatiques, dans lequel les instructions informatiques sont conçues pour amener au moins un processeur à exécuter le procédé conforme à l'une quelconque des revendications 1 à 11.
